# EUROPEAN PATENT SPECIFICATION

(11) **EP 3 176 322 B1**
(45) Date of publication and mention of the grant of the patent: **13.06.2018**
(21) Application number: 16193050.8
(22) Date of filing: 10.10.2016
(51) Int. Cl.: D21D 5/02

(54) **PAPERMAKING SCREEN DEVICE**
SIEBVORRICHTUNG ZUR PAPIERHERSTELLUNG
DISPOSITIF DE TAMISAGE POUR LA FABRICATION DE PAPIER

(30) Priority: 02.12.2015 JP 2015235281
(43) Date of publication of application: 07.06.2017
(73) Proprietor: Aikawa Iron Works Co., Ltd., Shizuoka-shi, Shizuoka 420-0858 (JP)
(72) Inventor: Aikawa, Masaki, Shizuoka, Shizuoka (JP)
(74) Representative: Schwabe - Sandmair - Marx

(56) References cited:
- EP-A1- 0 649 940
- US-A- 5 798 025

## Description

### Background of the Invention and Related Art Statement

The present invention relates to a papermaking screen device, and especially, relates to the papermaking screen device finely selecting a disintegrated fiber effectively to enhance a fine selection effect and made compact. Japanese Unexamined Patent Application Publication No. 2014-55377 discloses a papermaking-raw-material screen device comprising a disintegration function. Similar paper-making screen devices are known from EP 0 649 940 A1 and US 5 798 025 A.

The papermaking-raw-material screen device is provided with a vane on an outer periphery of a rotor, and carries out a mesh cleaning operation of a screen cylinder using a pressure change when the vane passes around the screen cylinder to continuously carry out a fine selection operation of the papermaking raw material.

However, a papermaking raw material having a high concentration on a downstream side of the screen cylinder of the aforementioned papermaking-raw-material screen device is disintegrated at a disintegration portion, and the disintegrated fiber is returned to an upstream side of the screen cylinder, so that for a portion which has been returned, an inflow amount of the papermaking raw material from a raw-material entrance is reduced, and the disintegration portion is positioned in a portion different from the screen cylinder carrying out the fine selection operation, so that if a height in a vertical direction of the screen cylinder is increased, a height in a vertical direction of the device becomes higher so as to have a problem that a whole device becomes large.

The present invention is made in view of the aforementioned current condition, and an object of the present invention is to provide a papermaking screen device.

Further objects and advantages of the invention will be apparent from the following description of the invention.

### Summary of the Invention

A papermaking screen device according to the first aspect for separating a foreign material from a papermaking raw material through a cylindrical screen inside a casing comprises a first chamber and a second chamber divided by the cylindrical screen inside the casing; a papermaking-raw-material supply passage having a supply opening end facing the first chamber to supply the papermaking raw material to the first chamber; a finely-selected-papermaking-raw-material discharge passage having a discharge opening end facing the second chamber to discharge the finely selected papermaking raw material having passed through the screen into the second chamber to an outside of the casing; a foreign-material discharge passage having a foreign material discharge opening end facing the first chamber to discharge a papermaking raw material including a foreign material which cannot pass through the screen in the first chamber to the outside of the casing; a rotor having an approximately columnar shape, disposed inside the screen, and including a stirring member stirring the papermaking raw material on an outside surface thereof facing the screen; an end-portion-side stirring member attached to a top face of the rotor having the approximately columnar shape, and positioned to face an inside of the cylindrical screen to stir the papermaking raw material; a stirring-member one-side disintegration portion provided on an outer periphery of the end-portion-side stirring member facing the inside of the cylindrical screen; and a screen other-side disintegration portion provided in a portion of the screen facing the stirring-member one-side disintegration portion, wherein the screen other-side disintegration portion and the stirring-member one-side disintegration portion work together to disintegrate the papermaking raw material.

Also, as for the papermaking screen device according to a second aspect, in the papermaking screen device according to the first aspect, a portion disintegrating the papermaking raw material by cooperation between the screen other-side disintegration portion and the stirring-member one-side disintegration portion is a disintegration zone portion inside the screen, and the first chamber is divided through the disintegration zone portion into a zone having a low papermaking raw material concentration on a side near the papermaking-raw-material supply passage, and a zone having a high papermaking raw material concentration on a side far from the papermaking-raw-material supply passage. Also, there is formed on the rotor return passage returning the papermaking raw material in the zone having the high papermaking raw material concentration to the zone having the low papermaking raw material concentration. Also, as for the papermaking screen device according to a third aspect, in the papermaking screen device according to the first aspect, a top-portion dilution-water supply passage having a dilution-water opening portion facing a top portion of the rotor is attached to a top portion of the casing, or a side-portion dilution-water supply passage having a dilution-water opening portion facing the stirring-member one-side disintegration portion is attached to a side portion of the casing. Also, as for the papermaking screen device according to a fourth aspect, in the papermaking screen device according to the first aspect, a top-portion dilution-water supply passage is attached to a top plate of the casing such that the dilution-water opening portion faces approximately a center of the rotor; and the foreign-material discharge passage has its foreign-material discharge opening end facing the top portion of the rotor and is attached to a portion of the top plate of the casing separated from the top-portion dilution-water supply passage. Also, as for the papermaking screen device according to a fifth aspect, in the papermaking screen device according to the first aspect, the end-portion-side stirring member has a length in a vertical direction longer than a width in a circumferential direction of the screen. According to the papermaking screen device with respect to the first aspect, the papermaking raw material having a low concentration on an upstream side of the screen is disintegrated by the stirring member provided on the outside surface of the rotor having the approximately columnar shape, and disintegrated fibers are guided to an outside from a portion inside the cylindrical screen facing the stirring member to be finely selected. Also, the papermaking raw material having a high concentration on a downstream side of the screen is disintegrated by cooperation between the stirring-member one-side disintegration portion and the screen other-side disintegration portion, and disintegrated fibers are guided to the outside from the portion inside the cylindrical screen facing the end-portion-side stirring member to be finely selected so as to improve a fine selection effect. Furthermore, there is included a disintegration function inside the screen so as to have effects such that a height in a vertical direction of the screen can be effectively used, a whole device can be made compact as well, and the like.

Also, according to the papermaking screen device with respect to the second aspect, in addition to an effect of the invention according to the aforementioned first aspect, in the rotor, there is formed a return passage returning the papermaking raw material in the zone having the high papermaking raw material concentration to the zone having the low papermaking raw material concentration so as to prolong a time when the papermaking raw material remains inside the screen, disintegrate not-yet-disintegrated fibers of the papermaking raw material further, and improve the fine selection effect.

Also, according to the papermaking screen device with respect to the third aspect, in addition to the effect of the invention according to the aforementioned first aspect, the top-portion dilution-water supply passage having its dilution-water opening portion facing the top portion of the rotor is attached to the casing, so that dilution water from the top-portion dilution-water supply passage diffuses from the top portion of the rotor so as to efficiently dilute the papermaking raw material concentration, and improve a fine selection efficiency of the screen.

Also, according to the papermaking screen device with respect to the fourth aspect, in addition to the effect of the invention according to the aforementioned first aspect, the top-portion dilution-water supply passage having its dilution-water opening portion facing the approximately center portion of the top portion of the rotor is attached to the casing, so that the dilution water from the top-portion dilution-water supply passage diffuses from the approximately center portion of the top portion of the rotor so as to efficiently dilute the papermaking raw material concentration, and improve the fine selection efficiency of the screen. Furthermore, there is provided the foreign-material discharge passage having its foreign-material discharge opening end facing the top portion of the rotor, attached to the portion separated from the top-portion dilution-water supply passage of the top plate of the casing, so that the foreign material of the papermaking raw material can be easily taken out of the first chamber, and effective fibers can be easily separated from the papermaking raw material.

Also, according to the papermaking screen device with respect to the fifth aspect, in addition to the effect of the invention according to the aforementioned first aspect, the end-portion-side stirring member has a length in the vertical direction longer than the width of the circumferential direction of the screen, so that a processing chamber of the papermaking raw material having the high concentration on the downstream side of the screen can be increased in a vertical direction, and for a portion which has been increased, more papermaking raw materials can be finely selected so as to enhance the fine selection effect further.

### Brief Description of the Drawings

Fig. 1 is a schematic partial cross-sectional view of a papermaking screen device of one embodiment of the present invention.
Fig. 2 is a schematic perspective view of a rotor of the papermaking screen device in Fig. 1.
Fig. 3 is a schematic perspective view of a screen of the papermaking screen device in Fig. 1.
Fig. 4 is a schematic perspective view of a rotor of another embodiment different from the rotor in Fig. 2.
Fig. 5 is a schematic front view in Fig. 4.
Fig. 6 is a schematic partial cross-sectional view of a papermaking screen device of another embodiment different from the papermaking screen device in Fig. 1.
Fig. 7 is a schematic partial cross-sectional view of a papermaking screen device of another embodiment different from the papermaking screen device in Fig. 6.

### Detailed Description of Preferred Embodiments

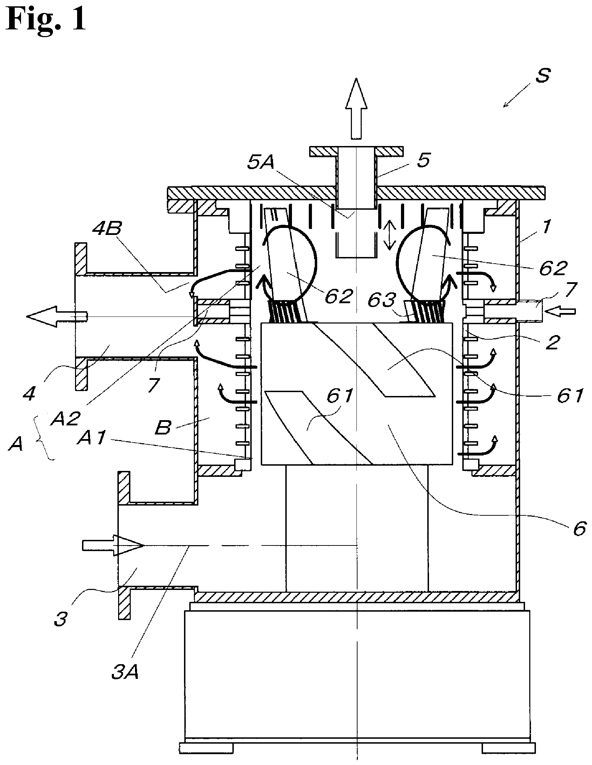

A papermaking screen device of one embodiment of the present invention will be explained with reference to Fig. 1 to Fig. 3.

In Fig. 1, the reference sign S represents a papermaking screen device, and the papermaking screen device S is the device separating a foreign material from a papermaking raw material through a cylindrical screen 2 inside a casing 1 to finely select the papermaking raw material.

The casing 1 is divided into a first chamber A and a second chamber B by the cylindrical screen 2.

In the casing 1, there is connected a papermaking-raw-material supply passage 3. In the papermaking-raw-material supply passage 3, an opening end 3A faces the first chamber A, and the papermaking-raw-material supply passage 3 supplies the papermaking raw material to the first chamber A.

Also, in the casing 1, there is connected a finely-selected-papermaking-raw-material discharge passage 4. In the finely-selected-papermaking-raw-material discharge passage 4, an opening end 4B faces the second chamber B, and the finely-selected-papermaking-raw-material discharge passage 4 discharges a finely selected papermaking raw material in the second chamber B to an outside of the casing 1 through the screen 2.

Also, in the casing 1, there is connected a foreign-material discharge passage 5. In the foreign-material discharge passage 5, an opening end 5A faces the first chamber A, and the foreign-material discharge passage 5 discharges a papermaking raw material including the foreign material which cannot pass through the screen 2 of the first chamber A, to the outside of the casing 1.

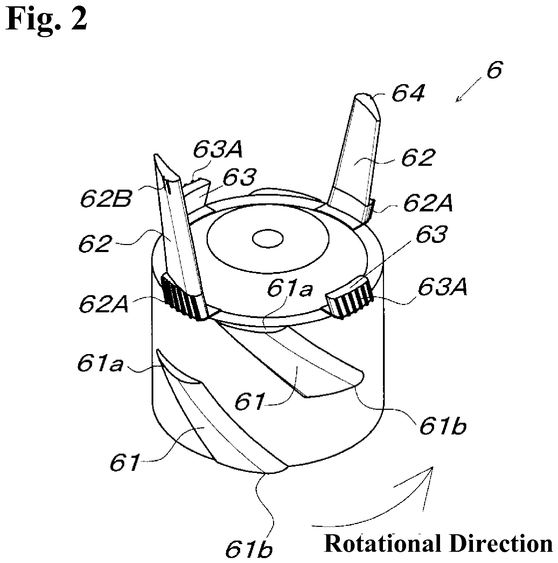

Also, the reference numeral 6 shown in Fig. 1 and Fig. 2 represents a rotor having an approximately columnar shape, and as shown in Fig. 1, the rotor 6 is disposed inside the screen 2, and includes stirring members 61 stirring the papermaking raw material on an outside surface facing the screen 2. The stirring members 61 stir the papermaking raw material, and operate to send the papermaking raw material from an upstream side to a downstream side. There is provided a plurality of stirring members 61, and more specifically, as shown in Fig. 2, upper ends 61a of the stirring members 61 incline in such a way as to be located behind lower ends 61b of the stirring members 61 with respect to a rotation direction (for example, in the rotor 6 in Fig. 2, a counter-clockwise rotation).

Also, the reference numerals 62 and 63 shown in Fig. 1 and Fig. 2 represent end-portion-side stirring members, and the end-portion-side stirring members 62 and 63 are attached to a top face of the rotor 6, and positioned to face an inside of the cylindrical screen 2.

On outer peripheries of the end-portion-side stirring members 62 and 63 facing the inside of the cylindrical screen 2, there are provided stirring-member one-side disintegration portions 62A, 62B, and 63A.

As shown in Fig. 2, the stirring-member one-side disintegration portions 62A, 62B, and 63A may have a concave-convex shape, and may have a concave shape or a convex shape which are not shown in the drawings.

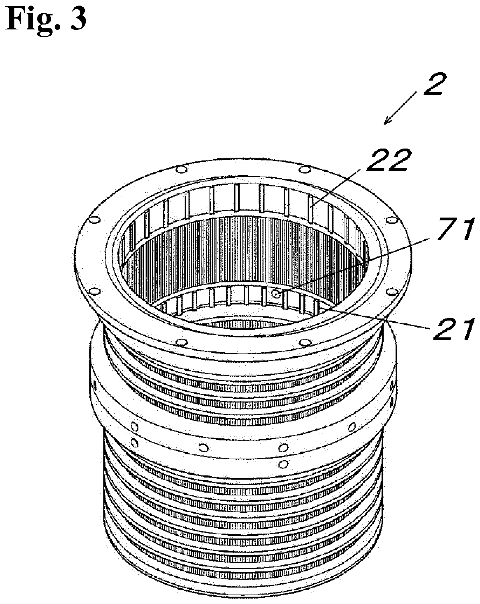

Also, the reference numerals 21 and 22 shown in Fig. 3 represent screen other-side disintegration portions, and the screen other-side disintegration portions 21 and 22 are provided in portions facing the stirring-member one-side disintegration portions 62A, 62B, and 63A, and the stirring-member one-side disintegration portions 62A and 63A face the screen other-side disintegration portion 21, and the stirring-member one-side disintegration portions 62B face the screen other-side disintegration portion 22, respectively. As shown in Fig. 2, the screen other-side disintegration portions 21 and 22 may have a concave-convex shape, and may have a concave shape or a convex shape which are not shown in the drawings.

Incidentally, as shown by arrows in Fig. 1, the end-portion-side stirring members 62 and 62 stir the papermaking raw material, and operate to send the papermaking raw material from the downstream side to the upstream side in an area of the papermaking raw material having a high concentration on the downstream side of the screen 2.

Then, the screen other-side disintegration portions 21 and 22, and the stirring-member one-side disintegration portions 62A, 62B, and 63A work together to disintegrate the papermaking raw material.

Also, the reference numeral 7 shown in Fig. 1 represents a side-portion dilution-water supply passage, and the side-portion dilution-water supply passage 7 is attached to the casing 1 such that a dilution-water opening portion 71 (see Fig. 3) faces the stirring-member one-side disintegration portions 62A and 63A. Then, dilution water from the side-portion dilution-water supply passage 7 efficiently dilutes the papermaking raw material in proximity to the stirring-member one-side disintegration portions 62A and 63A to allow the papermaking raw material to be easily disintegrated so as to improve a fine selection efficiency of the screen.

Therefore, when the papermaking raw material is supplied to the inside of the screen 2, i.e. the first chamber A through the papermaking-raw-material supply passage 3, and stirred by the stirring members 61 of the rotor 6, fibers inside the papermaking raw material pass through the screen 2, and the foreign material inside the papermaking raw material cannot pass through the screen 2, so that the papermaking raw material is finely selected.

Namely, the papermaking raw material having a low concentration on the upstream side of the screen 2 is stirred by the stirring members 61 provided on the outside surface of the rotor 6 having the approximately columnar shape, and the stirred fiber is guided to an outside from a portion inside the cylindrical screen 2 facing the stirring members 61 to be finely selected.

Then, at a front portion of the stirring members 61, there is applied a pressure relative to the screen 2, and at a back portion of the stirring members 61, there is applied a negative pressure relative to the screen 2 so as to provide a mesh cleaning operation of the screen 2 to prevent clogging of the meshes of the screen 2.

Also, the papermaking raw material having the high concentration on the downstream side of the screen 2 is disintegrated by cooperation between the stirring-member one-side disintegration portions 62A, 62B, and 63A, and the screen other-side disintegration portions 21 and 22, and the disintegrated fiber is guided to the outside from the portion inside the cylindrical screen 2 facing the end-portion-side stirring members 62 and 63 to be finely selected so as to improve a fine selection effect. Also, there are included disintegration functions (62A, 62B, 63A, 21, and 22) inside the screen 2 so as to have effects such that a height in a vertical direction of the screen 2 can be effectively used, and a whole device can be made compact as well, and the like.

Incidentally, as shown in Fig. 1 and Fig. 2, the end-portion-side stirring members 62 are end-portion-side longitudinal stirring members 62 wherein a length in a vertical direction is longer than a width in a circumferential direction of the screen 2, so that a processing chamber of the papermaking raw material having the high concentration on the downstream side of the screen 2 can be increased in a vertical direction, and for a portion which has been increased, more papermaking raw materials can be finely selected so as to enhance the fine selection effect further.

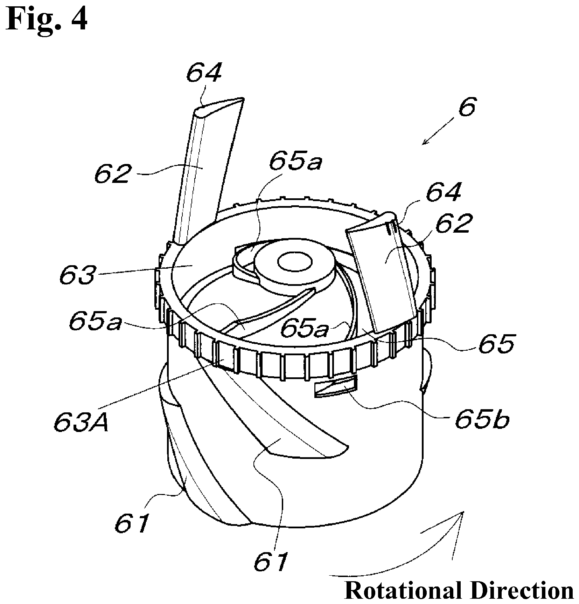

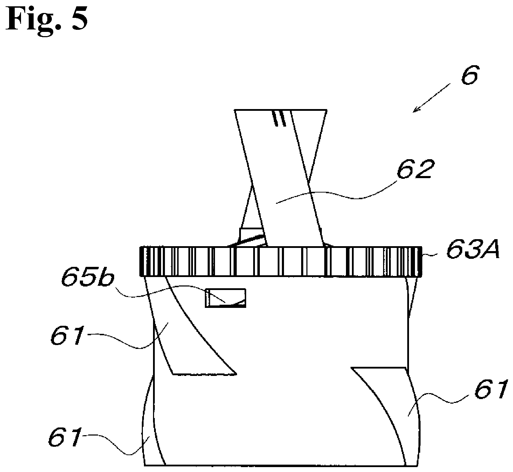

Also, Fig. 4 and Fig. 5 are other embodiments of the rotor 6 in Fig. 2; the reference numeral 65 shown in Fig. 4 represents a return passage formed in the rotor 6; and the stirring-member one-side disintegration portion 63A is provided along a whole periphery of the rotor 6, and has a positional relationship of facing the screen other-side disintegration portion 21.

Then, a portion disintegrating the papermaking raw material by cooperation between the screen other-side disintegration portion 21 and the stirring-member one-side disintegration portion 63A is a disintegration zone portion, and the first chamber A is divided into a zone (A1 in Fig. 1) having a low papermaking raw material concentration on a side near the papermaking-raw-material supply passage 3, and a zone (A2 in Fig. 1) having a high papermaking raw material concentration on a side far from the papermaking-raw-material supply passage 3 through the aforementioned disintegration zone portion. Also, the return passage 65 returns the papermaking raw material in the zone A2 having the high papermaking raw material concentration to the zone A1 having the low papermaking raw material concentration.

The reference sign 65a shown in Fig. 4 represents guide vanes provided on a top portion of the rotor 6, and the reference sign 65b shown in Fig. 4 and Fig. 5 represents an opening portion returning the papermaking raw material guided to the guide vanes 65a to the upstream side above the disintegration zone portion.

Namely, there is formed the return passage 65 returning the papermaking raw material in the zone A2 having the high papermaking raw material concentration to the zone A1 having the low papermaking raw material concentration in the rotor 6 so as to prolong a time when the papermaking raw material remains inside the screen 2, disintegrate not-yet-disintegrated fibers of the papermaking raw material further, and improve the fine selection effect.

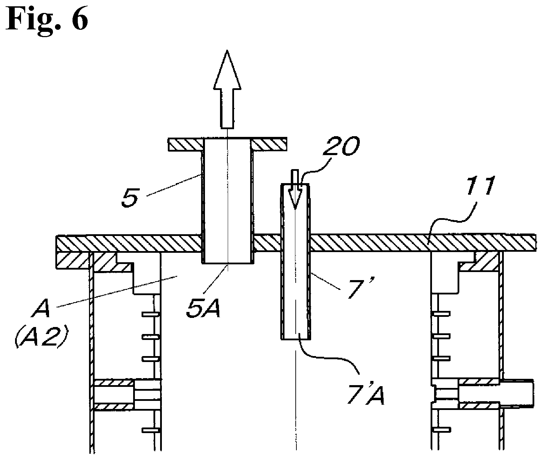

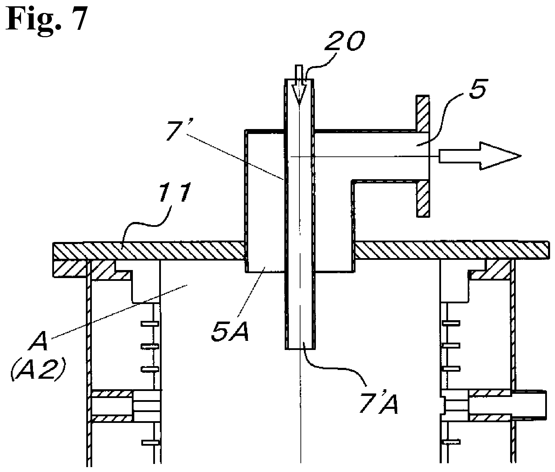

Incidentally, the dilution-water opening portion 71 (see Fig. 3) of the side-portion dilution-water supply passage 7 is provided in such a way as to face the stirring-member one-side disintegration portions 62A and 63A; however, in the present invention, it is not limited to the above, and for example, it may be provided in such a manner shown in Fig. 6 and Fig. 7.

Namely, the reference sign 7' shown in Fig. 6 and Fig. 7 is a top-portion dilution-water supply passage, and the top-portion dilution-water supply passage 7' is attached to a top plate 11 of the casing 1 such that a dilution-water opening portion 7'A faces the top portion of the rotor 6 (for example, an approximately center portion of the top portion of the rotor 6). Dilution water 20 from the top-portion dilution-water supply passage 7' diffuses from the top portion of the rotor 6 (for example, the approximately center portion of the top portion of the rotor 6) so as to efficiently dilute a papermaking raw material concentration, and improve the fine selection efficiency of the screen.

Also, in a case wherein the foreign-material discharge passage 5 and the top-portion dilution-water supply passage 7' are attached to the top plate 11 of the casing 1, the opening end 5A of the foreign-material discharge passage 5 is preferred to be set at a higher position in a vertical direction than the dilution-water opening portion 7'A of the top-portion dilution-water supply passage 7'.

This allows a foreign material which has floated up to be easily discharged through the opening end 5A of the foreign-material discharge passage 5, and efficiently supplies the dilution water 20 from the dilution-water opening portion 7'A of the top-portion dilution-water supply passage 7' to the papermaking raw material having the high concentration.

Also, as shown in Fig. 6, a center of the foreign-material discharge passage 5 and a center of the top-portion dilution-water supply passage 7' may be set to be shifted from each other. Also, as shown in Fig. 7, the center of the foreign-material discharge passage 5 and the center of the top-portion dilution-water supply passage 7' may be set to be matched.

Also, when the top-portion dilution-water supply passage 7', wherein the dilution-water opening portion 7'A faces the approximately center portion of the top portion of the rotor 6, is attached to the casing 1, the dilution water from the top-portion dilution-water supply passage 7' diffuses from the approximately center portion of the top portion of the rotor 6 so as to efficiently dilute the papermaking raw material concentration, and improve the fine selection efficiency of the screen. Also, there is provided the foreign-material discharge passage 5 (see Fig. 6) wherein the foreign-material discharge opening end 5A faces the top portion of the rotor 6, attached to a portion separated from the top-portion dilution-water supply passage 7' of the top plate 11 of the casing 1, so that the foreign material of the papermaking raw material can be easily taken out of the first chamber A (A2), and an effective fiber can be easily separated from the papermaking raw material.

Also, for example, the position of the opening end 5A of the foreign-material discharge passage 5 may be lifted up or lowered down by a lifting and lowering device (not shown in the drawings) in such a way as to move the foreign-material discharge passage 5 up and down in the vertical direction.

This is for lifting the position of the opening end 5A of the foreign-material discharge passage 5 in a case wherein the foreign material is desired to be taken out according to an amount of the foreign material in the first chamber A (A2), i.e. more, and lowering the position of the opening end 5A of the foreign-material discharge passage 5 in a case wherein the foreign material is not desired to be taken out more.

While the invention has been explained with reference to the specific embodiments of the invention, the explanation is illustrative and the invention is limited only by the appended claims.

## Claims

1. A papermaking screen device for separating a foreign material from a papermaking raw material, comprising:
a casing (1);
a cylindrical screen (2) inside the casing (1);
a first chamber (A) and a second chamber (B) divided by the cylindrical screen (2) inside the casing (1);
a papermaking-raw-material supply passage (3) having a supply opening end (3A) facing the first chamber (A) to supply the papermaking raw material to the first chamber (A);
a finely-selected-papermaking-raw-material discharge passage (4) having a discharge opening end (4B) facing the second chamber (B) to discharge a finely selected papermaking raw material having passed through the screen (2) into the second chamber (B) to an outside of the casing (1);
a foreign-material discharge passage (5) having a foreign material discharge opening end (5A) facing the first chamber (A) to discharge a papermaking raw material including a foreign material which cannot pass through the screen (2) in the first chamber (A) to the outside of the casing(1);
a rotor (6) having an approximately columnar shape, disposed inside the screen (2), and including a stirring member (61) stirring the papermaking raw material on an outside surface (62, 63) of the rotor (6) facing the screen (2); **characterized by** an end-portion-side stirring member (62, 63) attached to a top face of the rotor (6) and positioned to face an inside of the cylindrical screen (2) to stir the papermaking raw material;
a stirring-member one-side disintegration portion (62A, 63A, 62B) provided on an outer periphery of the end-portion-side stirring member (62, 63) facing the inside of the cylindrical screen (2); and
a screen other-side disintegration portion (21, 22) provided in a portion of the screen (2) facing the stirring-member one-side disintegration portion (62A, 63A, 62B),
wherein the screen other-side disintegration portion (21, 22) and the stirring-member one-side disintegration portion (62A, 62A, 63B) work together to disintegrate the papermaking raw material.

2. A papermaking screen device according to claim 1, wherein a portion disintegrating the papermaking raw material by cooperation between the screen other-side disintegration portion (21) and the stirring-member one-side disintegration portion (62A, 63A) is a disintegration zone portion inside the screen (2),
the first chamber (A) is divided through the disintegration zone portion into a zone (A1) having a low papermaking raw material concentration on a side near the papermaking-raw-material supply passage (3), and a zone (A2) having a high papermaking raw material concentration on a side far from the papermaking-raw-material supply passage (3), and a return passage (65) returning the papermaking raw material in the zone (A2) having the high papermaking raw material concentration to the zone (A1) having the low papermaking raw material concentration is formed on the rotor (6).

3. A papermaking screen device according to claim 1, further comprising a top-portion dilution-water supply passage (7') attached to a top portion of the casing (1) and having a dilution-water opening portion (7'A) facing a top portion of the rotor (6), or comprising a side-portion dilution-water supply passage (7) attached to a side-portion of the casing (1) and having a dilution-water opening portion (71) facing the stirring-member one-side disintegration portion (62A, 63A).

4. A papermaking screen device according to claim 1, further comprising,
a top-portion dilution-water supply passage (7') attached to a top plate (11) of the casing (1) such that a dilution-water opening portion (7A) faces approximately a center of the rotor (6); and
wherein the foreign-material discharge passage (5) has its foreign material discharge opening end (5A) facing a top portion of the rotor (6) and is attached to a portion of the top plate (11) of the casing (1) separated from the top-portion dilution-water supply passage (7').

5. A papermaking screen device according to claim 1, wherein the end-portion-side stirring member (62) has a length in a vertical direction longer than a width thereof in a circumferential direction of the screen (2).

## Patentansprüche

1. Eine Siebvorrichtung der Papierproduktion um Fremdmaterial von dem Rohmaterial für die Papierproduktion zu trennen, die Siebvorrichtung umfassend:
ein Gehäuse (1);
ein zylindrisches Sieb (2) innerhalb des Gehäuses (1);
eine erste Kammer (A) und eine zweite Kammer (B), die durch das zylindrische Sieb (2) innerhalb des Gehäuses (2) getrennt sind;
einen Zuführungskanal (3) für das Rohmaterial für die Papierproduktion, mit einem Zuführungsöffnungsende (3A) das der ersten Kammer (A) zugewandt ist, um das Rohmaterial für die Papierproduktion der ersten Kammer (A) zuzuführen;
einen Auslasskanal (4) für das letztendlich aussortierte Rohmaterial für die Papierproduktion mit einem Auslassöffnungsende (4B) das der zweiten Kammer (B) zugewandt ist, um das durch das Sieb (2) hindurch gelangte letztendlich aussortierte Rohmaterial für die Papierproduktion in die zweite Kammer (B) zu einer Außenseite des Gehäuses (1) zu fördern;
einen Auslasskanal (5) für das Fremdmaterial mit einem Fremdmaterialauslassöffnungsende (5A) das der ersten Kammer (A) zugewandt ist, um das Rohmaterial für die Papierproduktion mit einem Fremdmaterial das nicht durch das Sieb (2) in die erste Kammer (A) gelangen kann, zur Außenseite des Gehäuses (1) zu fördern;
einen Rotor (6) mit einer in etwa säulenförmigen Form, der innerhalb des Siebs (2) angeordnet ist, mit einem Rührer (61), der das Rohmaterial für die Papierproduktion an einer Außenfläche (62, 63) des Rotors (6), die dem Sieb (2) zugewandt ist, aufwühlt;
**charakterisiert durch**
einen endabschnittsseitigen Rührer (62, 63), der mit einer Oberseite des Rührers (6) verbunden und so angeordnet ist, dass einer Innenseite des zylindrischen Siebs (2) zugewandt ist, um das Rohmaterial zur Papierproduktion zu rühren;
ein an einer Seite befindlicher Rührerzerkleinerungsbereich (62A, 63A, 62B) an einer äußeren Peripherie des endabschnittsseitigen Rührer (62, 63), der der Innenseite des zylindrischen Siebs (2) zugewandt ist;
ein an einer anderen Seite befindlicher Siebzerkleinerungsbereich (21, 22), der in einem Bereich des Siebs (2) vorhanden ist, der dem in die eine Richtung gerichteten Rührerzerkleinerungsbereich (62A, 63A, 62B) zugewandt ist,
wobei der an der anderen Seite befindliche Siebzerkleinerungsbereich (21, 22) und der an der einen Seite befindliche Rührerzerkleinerungsbereich (62A, 63A, 62B) zusammenarbeiten, um das Rohmaterial für die Papierproduktion zu zerkleinern.

2. Siebvorrichtung der Papierproduktion nach Anspruch 1, wobei ein Bereich, der das Rohmaterial für die Papierproduktion durch das Zusammenwirken zwischen dem an der anderen Seite befindliche Siebzerkleinerungsbereich (21, 22) und dem an der einen Seite befindliche Rührerzerkleinerungsbereich (62A, 63A, 62B) zerkleinert, ein Zerkleinerungszonenbereich innerhalb des Siebs (2) ist,
die erste Kammer (A) durch den Zerkleinerungszonenbereich in eine erste Zone (A1) aufgeteilt ist, mit einer niedrigen Konzentration des Rohmaterials für die Papierproduktion auf einer Seite nahe dem Zuführungskanal (3) für das Rohmaterial für die Papierproduktion, und eine zweite Zone (A2) mit einer hohen Konzentration des Rohmaterials für die Papierproduktion auf einer Seite weit weg von dem Zuführungskanal (3) für das Rohmaterial für die Papierproduktion, und wobei eine Rückführungsleitung (65), die das Rohmaterial für die Papierproduktion aus der Zone (A2) mit der hohen Konzentration an Rohmaterial für die Papierproduktion in die Zone (A1) mit der niedrigen Konzentration an Rohmaterial für die Papierproduktion zurückführt, am Rotor (6) ausgebildet ist.

3. Siebvorrichtung der Papierproduktion nach Anspruch 1, ferner umfassend eine Kopfleitung (7') zur Zuführung von Verdünnungswasser, die mit einem Kopfbereich des Gehäuses (1) verbunden ist, mit einem Verdünnungswasseröffnungsbereich (7'A), der einem Kopfbereich des Rotors (6) zugewandt ist, oder einer Seitenbereichsverdünnungswasserzuführung (7), die mit einem Seitenbereich des Gehäuses (1) verbunden ist und einen Verdünnungswasseröffnungsbereich (71) hat, der dem an der einen Seite befindliche Rührerzerkleinerungsbereich (62A, 63A) zugewandt ist.

4. Siebvorrichtung der Papierproduktion nach Anspruch 1, ferner umfassend eine Verdünnungswasserzuführungsleitung (7') in einem Kopfbereich, die mit einer Kopfplatte (11) des Gehäuses (1) so verbunden ist, dass ein Verdünnungswasseröffnungsbereich (7A) in etwa einem Zentrum des Rotors (6) zugewandt ist, und
wobei das Fremdmaterialauslassöffnungsende (5a) des Fremdmaterialauslasskanals (5) einem Kopfbereich des Rotors (6) zugewandt und mit einem Bereich der Kopfplatte (11) des Gehäuses (1) verbunden ist, der von der Kopfleitung (7') zur Zuführung von Verdünnungswasser getrennt ist.

5. Siebvorrichtung der Papierproduktion nach Anspruch 1, wobei der endabschnittsseitige Rührer (62) in Vertikalrichtung eine Länge hat, die größer ist als eine Breite des Rührers (62) in einer Umfangsrichtung des Siebs (2).

## Revendications

1. Dispositif de tamis de fabrication de papier pour séparer une matière étrangère d'une matière première pour fabriquer du papier, comprenant :
un boîtier (1) ;
un tamis cylindrique (2) à l'intérieur du boîtier (1) ;
une première chambre (A) et une deuxième chambre (B) divisées par le tamis cylindrique (2) à l'intérieur du boîtier (1) ;
un passage de délivrance de matière première pour fabriquer du papier (3) comportant une extrémité d'ouverture de délivrance (3A) faisant face à la première chambre (A) de façon à délivrer la matière première pour fabriquer du papier à la première chambre (A) ;
un passage de décharge de matière première pour fabriquer du papier finement sélectionnée (4) comportant une extrémité d'ouverture de décharge (4B) faisant face à la deuxième chambre (B) de façon à décharger une matière première pour fabriquer du papier finement sélectionnée ayant traversé le tamis (2) dans la deuxième chambre (B) vers l'extérieur du boîtier (1) ;
un passage de décharge de matière étrangère (5) comportant une extrémité d'ouverture de décharge de matière étrangère (5A) faisant face à la première chambre (A) de façon à décharger une matière première pour fabriquer du papier comprenant une matière étrangère qui ne peut pas traverser le tamis (2) dans la première chambre (A) vers l'extérieur du boîtier (1) ;
un rotor (6) ayant une forme approximativement en colonne, disposé à l'intérieur du tamis (2), et comprenant un élément d'agitation (61) agitant la matière première pour fabriquer du papier sur une surface extérieure (62, 63) du rotor (6) faisant face au tamis (2) ;
**caractérisé par** :
un élément d'agitation du côté d'une partie d'extrémité (62, 63) fixé à une face supérieure du rotor (6) et positionné de façon à faire face à l'intérieur du tamis cylindrique (2) de façon à agiter la matière première pour fabriquer du papier ;
une partie de désintégration d'un côté de l'élément d'agitation (62A, 63A, 62B) disposée sur une périphérie extérieure de l'élément d'agitation du côté d'une partie d'extrémité (62, 63) faisant face à l'intérieur du tamis cylindrique (2) ; et
une partie de désintégration de l'autre côté du tamis (21, 22) disposée dans une partie du tamis (2) faisant face à la partie de désintégration d'un côté de l'élément d'agitation (62A, 63A, 62B),
dans lequel la partie de désintégration de l'autre côté du tamis (21, 22) et la partie de désintégration d'un côté de l'élément d'agitation (62A, 62A, 63B) travaillent ensemble de façon à désintégrer la matière première pour fabriquer du papier.

2. Dispositif de tamis de fabrication de papier selon la revendication 1, dans lequel une partie désintégrant la matière première pour fabriquer du papier par coopération entre la partie de désintégration de l'autre côté du tamis (21) et la partie de désintégration d'un côté de l'élément d'agitation (62A, 63A) est une partie de zone de désintégration à l'intérieur du tamis (2),
la première chambre (A) étant divisée par l'intermédiaire de la partie de zone de désintégration en une zone (A1) ayant une faible concentration en matière première pour fabriquer du papier sur un côté proche du passage de délivrance de matière première pour fabriquer du papier (3), et une zone (A2) ayant une concentration élevée en matière première pour fabriquer du papier sur un côté éloigné du passage de délivrance de matière première pour fabriquer du papier (3), et
un passage de retour (65) renvoyant la matière première pour fabriquer du papier dans la zone (A2) ayant la concentration élevée en matière première pour fabriquer du papier vers la zone (A1) ayant la faible concentration en matière première pour fabriquer du papier est formé sur le rotor (6).

3. Dispositif de tamis de fabrication de papier selon la revendication 1, comprenant de plus un passage de délivrance d'eau de dilution de partie supérieure (7') fixé à une partie supérieure du boîtier (1) et comportant une partie d'ouverture d'eau de dilution (7'A) faisant face à une partie supérieure du rotor (6), ou comprenant un passage de délivrance d'eau de dilution de partie latérale (7) fixée à une partie latérale du boîtier (1) et comportant une partie d'ouverture d'eau de dilution (71) faisant face à la partie de désintégration d'un côté de l'élément d'agitation (62A, 63A).

4. Dispositif de tamis de fabrication de papier selon la revendication 1, comprenant de plus :
un passage de délivrance d'eau de dilution de partie supérieure (7') fixé à une plaque supérieure (11) du boîtier (1) de telle sorte qu'une partie d'ouverture d'eau de dilution (7A) fasse approximativement face à un centre du rotor (6) ; et
dans lequel le passage de décharge de matière étrangère (5) a son extrémité d'ouverture de décharge de matière étrangère (5A) qui fait face à une partie supérieure du rotor (6) et qui est fixée à une partie de la plaque supérieure (11) du boîtier (1) séparée du passage de délivrance d'eau de dilution de partie supérieure (7').

5. Dispositif de tamis de fabrication de papier selon la revendication 1, dans lequel l'élément d'agitation du côté d'une partie d'extrémité (62) a une longueur dans la direction verticale qui est plus longue qu'une largeur de celui-ci dans une direction circonférentielle du tamis (2).
